Europäisches Patentamt

European Patent Office

Office européen des brevets

(19)

(11) Veröffentlichungsnummer : **0 094 903**
**B1**

(12) **EUROPÄISCHE PATENTSCHRIFT**

(45) Veröffentlichungstag der Patentschrift :
19.10.88

(51) Int. Cl.⁴ : **F 23 D 14/20**

(21) Anmeldenummer : 83730050.8

(22) Anmeldetag : 17.05.83

(54) Verfahren zum Betreiben eines Injektorbrenners.

(30) Priorität : 18.05.82 DE 3219105

(43) Veröffentlichungstag der Anmeldung :
23.11.83 Patentblatt 83/47

(45) Bekanntmachung des Hinweises auf die Patenterteilung : 19.10.88 Patentblatt 88/42

(84) Benannte Vertragsstaaten :
AT BE CH DE FR GB IT LI NL SE

(56) Entgegenhaltungen :
DE-A- 1 910 115
DE-A- 2 013 816
RUDOLF GÜNTHER "Verbrennung und Feuerung",
1974, Springer Verlag, Berlin-Heidelberg-New York,
pages 222, 223, 227
Erdgas-Information (Ruhrgas AG - 12.1981)
Die Ziegelindustrie (Heft 19/20-1967)

(73) Patentinhaber : Gatzke, Horst, Dr. Ing.
Wundtstrasse 58-60
D-1000 Berlin 19 (DE)

(72) Erfinder : Gatzke, Horst, Dr. Ing.
Wundtstrasse 58-60
D-1000 Berlin 19 (DE)

(74) Vertreter : Meinig, Karl-Heinz, Dipl.-Ing. et al
PATENTANWALTSBÜRO HENKEL, PFENNING, FEI-
LER, HÄNZEL & MEINIG Kurfürstendamm 170
D-1000 Berlin 15 (DE)

## Beschreibung

Die Erfindung bezieht sich auf ein Verfahren zum Betreiben eines Injektorbrenners nach der Gattung des Hauptanspruchs.

In der ERDGAS-INFORMATION der Ruhrgas AG in Essen vom Dezember 1981 sind mehrere Industriebrenner mit Erdgasdüsen bekannt, die eine Vielzahl von Bohrungen aufweisen, durch die das Erdgas hindurchgeleitet wird und in feine Strahlen aufgeteilt wird. Die Verbrennungsluft wird in den meisten Fällen über Hochdruckventilatoren dem Brenner zugeführt. In einem Mischgehäuse werden die in feine Strahlen aufgeteilten Gassträhnen mit der Verbrennungsluft gemischt und in einen Brennerstein gedrückt, in dem die Zündung erfolgt. Der Brenner gibt dann die Flamme oder das so erzeugte Heizgas in einen Industrieofen oder eine Feuerung ab.

In den meisten Fällen wird mit Kaltluft als Verbrennungsluft gearbeitet, es wird aber auch vorgeschlagen, die Verbrennungsluft bis höchstens 400 °C aufzuheizen, wobei bei Temperaturen oberhalb dieser Grenze das Gas unter Ausscheidung von Kohlenstoff zu zerfallen beginnt. Aus der Veröffentlichung « Eine revolutionäre Technik der Atmosphärenumwälzung von Öfen und statischen Trocknern durch den Coanda-Effekt » in « DIE ZIEGELINDUSTRIE » Heft 19/20, 1967, Seite 633 ff ist eine COANDA-Düse bekannt, durch die die Luft zur besseren Durchmischung der Ofenatmosphäre, zum Beispiel in einem Tunnelofen, umgewälzt wird. Weiterhin wird vorgeschlagen, die COANDA-Düse nicht nur in Verbindung mit einer reinen Umwälzvorrichtung zu benutzen, sondern auch mit Wärmezuführung verbunden einzusetzen. Dazu wird ein Heizöl in die Ausströmseite der COANDA-Düse eingespritzt, wodurch die Gastemperatur erhöht wird. Schließlich ist noch ein Injektorbrenner für kleinere Feuerungsanlagen bekannt (DE-A-1 910 115), der mit mehreren Injektoren arbeitet, wobei einem atmosphärischen Coanda-Gasbrenner eine Zweitluftansaugung nachgeschaltet ist. Diese Ansaugung kann strömungstechnisch nach dem Venturi-Prinzip erfolgen. Die zur Verbrennung nötige Luft wird aus der Umgebung angesaugt. Nachteilig ist hierbei die begrenzte Möglichkeit der Leistungsregelung und die Empfindlichkeit des Brenners gegenüber Druckschwankungen, so daß er sich in Industrieöfen nicht einsetzen läßt.

Der Erfindung liegt die Aufgabe zugrunde, ein Verfahren zum Betreiben von Brennern für Industrieöfen zu schaffen, das einfach durchführbar ist und das bei gleicher Leistung weniger Energie verbraucht als bisher bekannte Brenner, wobei die Zuführung des Gases auch mit sehr hoher Geschwindigkeit möglich sein soll.

Diese Aufgabe wird erfindungsgemäß durch die im Kennzeichen des Anspruchs 1 angegebenen Merkmale erreicht. Beim Betreiben des Brenners nach dieser Verfahrensweise entfallen komplizierte Regelvorrichtungen. Bei der Verwendung von Brennern nach dem Stand der Technik kann insbesondere ein unter hohem Druck angeliefertes Erdgas nicht verwendet werden, sondern muß zunächst auf Drücke zwischen 100 und 200 mm WS heruntergeregelt werden, um dann mit einem gleichstarken Druckluftventilator dem Brennraum zugeführt werden zu können. Weiterhin führt die Anwendung des Verfahrens zu sehr viel einfachen Brennerausführungen als die bisher bekannten, da das Erdgas nicht in feine Gassträhnen aufgeteilt werden muß. In der COANDA-Düse wird das zugeführte Erdgas durch Düsenschlitze in Form eines dünnen Hohlzylinders fein verteilt, wobei durch diesen Gaszylinder Verbrennungsluft angesaugt wird, und zwar genau die Luftmenge, die für eine stöchiometrische Verbrennung notwendig ist. Damit entfallen Transport- und Verteilungseinrichtungen für die Verbrennungsluft. Weiterhin wird durch die besondere Form der COANDA-Düse bei der Reaktion zwischen Erdgas und Verbrennungsluft ein großer Schub auf die Umgebungsluft abgegeben, wodurch die Umwälzung der Ofenatmosphäre für eine Temperaturvergleichmäßigung verbessert wird.

Durch die in den Unteransprüchen angegebenen Maßnahmen sind vorteilhafte Weiterbildungen und Verbesserungen möglich. Besonders vorteilhaft ist, daß die angesaugte Verbrennungsluft möglichst heiß sein kann, da keine aufwendigen und hitzebeständigen Einrichtungen zur Förderung der heißen Luft notwendig sind. Durch Zugabe von Wasserdampf oder Wassernebel oder $H_2$, $O_2$-Gas zu dem Erdgas werden Verkokungen vermieden.

Durch Abspaltung und Abbremsen von Gas-Luftstrahlen aus dem Hauptstrahl des Brenners kann dieser « beruhigte » Teil gezündet werden, der dann in entsprechender Entfernung vom Brenner den Hauptstrahl zündet. Dadurch ist ein Gasaustritt auch im Schall- und Überschallbereich möglich.

Dadurch, daß die Brenngase unter Zuführung von Sauerstoff dem Brenner wieder zugeleitet werden, entstehen keine nach außen gelangenden schädlichen Abgase.

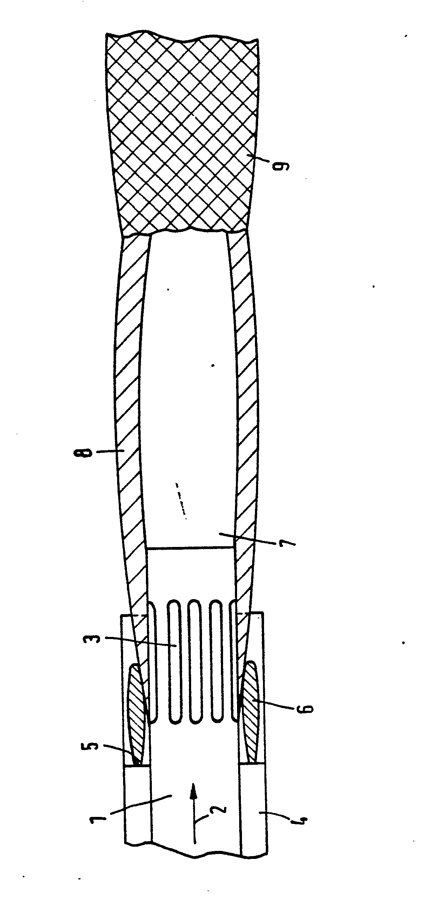

Die Erfindung soll in der nachfolgenden Beschreibung näher erläutert werden, wobei die in der einzigen Figur Prinzipdarstellung der Flamme am Brenneraustritt mit herangezogen wird.

Die bei dem erfindungsgemäßen Brenner verwendete COANDA-Düse kann trichterförmig aufgebaut sein, wobei die eine Öffnung dem Trichters völlig frei ist und zum Ansaugen des zu fördernden Fluids dient. In der Nähe der Eintrittsöffnung für das Sogfluid ist ein Ringspalt vorgesehen, dessen Austrittsquerschnitt zwischen 0,5 mm und 0,015 mm liegt. Durch diesen Ringspalt wird das Treibfluid geleitet und tritt mit großer Geschwindigkeit in den Ansaugraum aus und reißt an der Grenzfläche das Sogfluid mit. Bei der vorliegenden Erfindung wird das mit hoher kinetischer Energie angelieferte Erdgas als Treibfluid verwendet, das heißt, das Erdgas wird durch den Ringspalt geleitet. Nach Austritt aus dem Ringspalt bildet das Erdgas einen vorwärtsstrebenden dünnen Hohlzylinder, der in seiner Mitte die über die gesamte Trichterfläche eintretende Verbrennungsluft mit sich reißt. Durch die Ausbildung als Hohlzylinder ergibt sich bei der Ansaugung der Verbrennungsluft eine große Reaktionsfläche zwischen Erdgas und Verbrennungsluft. Dieses Reaktionsgemisch wird am Ausgang der COANDA-Düse mit Hilfe einer Zündkerze, eines katalytischen Zünders oder anderen Zündeinrichtungen gezündet, wobei die Verbrennung und die weitere Verarbeitung in bekannter Weise geschieht. Durch Änderung der Querschnitte des Ringspaltes und der Ansaugöffnungen können die Durchsatzvolumina geändert werden.

Durch die Verwendung von vorgeheizter Verbrennungsluft kann die Energiebilanz eines Industrieofens stark verbessert werden, insbesondere da bei der Verwendung der COANDA-Düse keine zusätzlichen Einrichtungen für die Bewegung von sehr heißer Luft, wie zum Beispiel Ventilatoren, notwendig sind. Oberhalb von 400 °C tritt aber bei normalen Verhältnissen eine Verkokung des Erdgases ein, so daß zusätzliche Vorkehrungen getroffen werden müssen. Dazu wird $H_2O$, vorzugsweise in Dampfoder Nebelform, der Erdgaszuführungsleitung zugesetzt. Der Dampf oder Wassernebel gelangt dann mit dem Erdgasgemisch in den Brenner und baut hier entstehende oder entstandene Kohlenstoffablagerungen sofort ab, indem das Wasser dissoziiert in $H_2$ und $O_2$-Ionen, wodurch gleichzeitig die Brennerdüse gekühlt wird, da es sich um einen endothermen Vorgang handelt. Als zusätzliche Apparaturen sind eine Quelle für die Erzeugung von destilliertem Wasser, eine Pumpe und eine Verdampfungsoder Verdüsungseinrichtung vorzusehen. Es empfiehlt sich, den Wasserdampf beziehungsweise Wassernebel kurz vor der Brennerdüse zuzugeben, da hier der notwendige Druckabfall während des Gasantrittes in die COANDA-Düse eine unnötige hohe Dampfspannung vermeidet.

Eine weitere Möglichkeit zur Verhinderung der Kohlenstoffablagerungen kann in der Zugabe von Knallgas, welches über eine elektrolytische Apparatur erzeugt wird, bestehen.

Dabei ist es sinnvoll, $H_2$ und $O_2$ getrennt dem Erdgas zuzusetzen, um elektrische Aufladungen während des Zuführens zu vermeiden, was zur Zündung des Knallgases führen könnte. Nachdem das Knallgas dem Erdgas zugeführt worden ist, besteht keine Explosionsgefahr mehr, da durch die Zumischung des Erdgases der Sauerstoffgehalt des gesamten Gasgemisches nicht mehr zur Auslösung einer Explosion ausreicht.

Diese eben beschriebenen Vorkehrungen verhindern nicht nur die Verkokung des Erdgases, sondern fördern auch die Zündwilligkeit des Gases.

Die Menge der Zugabe an Wasserdampf beziehungsweise Wassernebel oder Knallgas ist abhängig von der Zusammensetzung des verwendeten Erdgases, von der Mischgaseigenschaft und der Art der Lufterhitzung. Die Berücksichtigung dieser Fakten liegt aber im Rahmen des Könnens des Durchschnittsfachmanns, so daß keine genaueren Angaben gemacht werden müssen.

Wenn das Erdgas mit sehr hohen Geschwindigkeiten, die im Schall- und Überschallbereich liegen, angeliefert wird bzw. wenn das Gasgemisch mit diesen Geschwindigkeiten aus der COANDA-Düse austritt, ist eine einwandfreie Zündung des Gasgemisches nicht mehr gewährleistet.

Daher wird, wie in der einzigen Figur dargestellt, am Austritt der COANDA-Düse 1 ein kleiner Teil des Gasgemischstromes, der durch einen Pfeil 2 angedeutet ist, abgespalten. Dies wird dadurch realisiert, daß in der Düse Schlitze 3 vorgesehen sind, durch die ein kleiner Teil des Gasgemischstromes heraustritt. Durch diesen Vorgang wird die Geschwindigkeit dieses Teils des Gasgemischstromes verringert, wodurch die Zündwilligkeit erhöht wird. Die Zündung des abgetrennten Gasgemisches kann über eine Zündflamme, eine elektrische Zündung oder durch katalytische Zünder erfolgen. In der Figur ist eine Zündung über Zündflammen dargestellt. Dazu ist um die COANDA-Düse herum als Ummantelung um die COANDA-Düse 1 ein Ringzylinder 4 vorgesehen, dem ein fremdes Gasgemisch oder ein Teil des in der COANDA-Düse 1 verwendeten Gasgemisches zugeführt wird. Dieses Gasgemisch wird durch eine im vorderen Bereich des Ringzylinders 4 angeordnete Düse 5 geleitet und gezündet, wobei die Zündflamme mit 6 bezeichnet ist.

Aus der COANDA-Düse 1 tritt der Hauptstrom 7 des Gasgemisches mit sehr hoher Geschwindigkeit aus und beschleunigt den abgespaltenen und gezündeten Teil des Gasgemisches, der den Hauptstrom 7 als Flammenmantel 8 umgibt. In der Atmosphäre wird der Hauptstrom des Gasgemisches abgebremst und der Flammenmantel 8 zündet den Hauptstrom 7 in einem von der Düse 1 entfernten Bereich. Dabei ist die Entfernung zwischen der Zündung des Hauptstromes 7 und der COANDA-Düse 1 abhängig von der Austrittsgeschwindigkeit des Hauptstromes 7 und der Rückzündgeschwindigkeit der Hauptflamme 9.

Der als COANDA-Düse ausgebildete Brenner, insbesondere auch der Brenner für sehr hohe Austrittsgeschwindigkeiten des Gasgemisches, wird in Industrieöfen, Kesselanlagen und Trocknern sowie in allen Arten von Wärmeverbrauchern verwendet, wobei diese Einrichtungen derart ausgebildet sein können, daß die Brenngase nicht als Abgase nach außen gelangen. Vielmehr werden diese Brenngase dem als COANDA-Düse ausgebildeten Brenner wieder zugeführt, wobei aber für die Verwendung als Verbrennungsluft Sauerstoff zugeleitet werden muß. Dazu ist der COANDA-Düse eine weitere Düse vorgeschaltet, der einerseits die bei der Verbrennung auftretenden Abgase und andererseits von außen her Sauerstoff beziehungsweise ein Sauerstoff enthaltendes Gasgemisch zugeführt wird. Der Sauerstoffanteil in der dem Brenner zugeführten « Verbrennungsluft » soll mindestens 23 % betragen.

## Patentansprüche

1. Verfahren zum Betreiben eines Injektorbrenners mit einer Coanda-Düse, bei der ein Treibfluid unter Druck durch Düsenschlitze zugeführt wird und ein Sogfluid durch das Treibfluid angesaugt wird mit Gas als Treibfluid, dadurch gekennzeichnet, daß als Sogfluid Verbrennungsluft eingesetzt wird, daß im Austrittsbereich aus der Coanda-Düse ein kleiner Teil des Gasgemischstromes abgespalten und abgebremst wird, daß dieser Teil gezündet und durch den Hauptstrom, diesen als Flammenmantel umgebend, wieder beschleunigt wird und daß nach Abbremsen des Hauptstromes des Gasgemisches durch die Atmosphäre dieser durch den Flammenmantel in einem vom Düsenaustritt entfernten Bereich gezündet wird.

2. Verfahren nach Anspruch 1, dadurch gekennzeichnet, daß das Abspalten des kleinen Teils des Gasgemischstromes nach dem By-pass-Prinzip erfolgt.

3. Verfahren für die Verwendung gemäß Patentanspruch 1, dadurch gekennzeichnet, daß Verbrennungsluft mit mehr als 400 °C angesaugt wird, wobei dem Erdgas Wasserdampf oder Wassernebel zugesetzt wird.

4. Verfahren für die Verwendung gemäß Patentanspruch 1, dadurch gekennzeichnet, daß Verbrennungsluft mit mehr als 400 °C angesaugt wird, wobei dem Erdgas $H_2$ und/oder $O_2$ zugesetzt wird.

5. Verfahren nach wenigstens einem der Ansprüche 1 bis 4, dadurch gekennzeichnet, daß die in einem Trockner, Kammer- oder Tunnelofen durch den Brenner verbrannten Brenngase diesem unter Zuführung eines $O_2$ beinhaltenden Gasgemisches als Verbrennungsluft wieder zugeleitet werden.

6. Verfahren nach Anspruch 5, dadurch gekennzeichnet, daß der $O_2$-Anteil mindestens 23 % beträgt.

7. Verfahren nach wenigstens einem der Ansprüche 1 bis 6, dadurch gekennzeichnet, daß der Coanda-Düse eine weitere Düse vorgeschaltet wird, der seinerseits die bei der Verbrennung auftretenden Abgase und andererseits von außen her Sauerstoff bzw. ein Sauerstoff enthaltendes Gasgemisch zugeführt wird.

## Claims

1. Method of operating an injector burner having a Coanda jet, wherein a propellant fluid is fed under pressure through slots of the jet and a suction fluid is sucked through the propellant fluid with gas as the propellant fluid, characterised in that the suction fluid employed is combustion air, that in the region of the outlet from the Coanda jet a small portion of the gas mixture stream is split off and decelerated, that said portion is ignited and accelerated once more by the main stream, which it encloses as a flame enveloppe, and that after deceleration of the main stream of the gas mixture by the atmosphere, said main stream is ignited by the flame envelope in an region remote from the jet outlet.

2. Method according to Claim 1, characterised in that the small portion of the gas mixture stream is split off in accordance with the bypass principle.

3. Method for use according to Claim 1, characterised in that combustion air at more than 400 °C is inducted, and steam or fine spray is mixed with the natural gas.

4. Method for use according to Claim 1, characterised in that combustion air at more than 400 °C is inducted, and $H_2$ and/or $O_2$ is mixed with the natural gas.

5. Method according to at least one of Claims 1 to 4, characterised in that the fuel gases combusted by the burner in a drier, chamber furnace or tunnel furnace are recycled to said burner as combustion air with the addition of an oxygencontaining gas mixture.

6. Method according to Claim 5, characterised in that the proportion of oxygen is not less than 23 %.

7. Method according to at least one of Claims 1 to 6, characterised in that an additional jet is connected upstream of the Coanda jet, the exhaust gases produced during combustion, on the one hand, and oxygen or an oxygen-containing gas mixture from the outside, on the other hand, being fed to said additional jet.

## Revendications

1. Procédé pour actionner un brûleur à injection comportant une buse COANDA à laquelle on amène à travers des fentes de la buse un fluide combustible sous pression et dans laquelle un fluide comburant est aspiré par le fluide combustible qui est un gaz, caractérisé en ce qu'on utilise un courant d'air de combustion comme comburant, qu'une faible partie du courant d'air gazeux est séparée dans la zone de sortie de la buse COANDA et est fermée, que cette partie est enflammée et qu'elle est à nouveau accélérée par le courant principal qu'elle entoure sous forme d'une enveloppe de flammes, et en ce que ce courant principal du mélange gazeux, après avoir été freiné par l'atmosphère, est enflammé par ledit manteau de flammes dans une zone éloignée de la sortie de la buse.

2. Procédé conforme à la revendication 1, caractérisé en ce que la séparation de la faible partie du courant gazeux se fait selon le principe de la dérivation.

3. Procédé conforme à la revendication 1, caractérisé en ce qu'on aspire de l'air de combustion à plus de 400 °C, de la vapeur ou du brouillard d'eau étant alors rajouté au gaz naturel.

4. Procédé conforme à la revendication 1, caractérisé en ce que l'air de combustion aspiré est à plus de 400 °C, $H_2$ et/ou $O_2$ étant alors ajouté au gaz naturel.

5. Procédé conforme à l'une quelconque des revendications 1 à 4, caractérisé en ce que les gaz de combustion brûlés par le brûleur dans un séchoir, un four à foyer ou un four tunnel sont à nouveau ramenés à celui-ci comme air de combustion sous forme d'un mélange gazeux contenant de l'$O_2$.

6. Procédé conforme à la revendication 5, caractérisé en ce que le pourcentage d'$O_2$ est au moins de 23 %.

7. Procédé conforme à l'une quelconque des revendications 1 à 6, caractérisé en ce qu'on dispose en amont de la buse COANDA, une buse supplémentaire à laquelle on amène d'une part les gaz d'échappement produits lors de la combustion, et d'autre part, de l'oxygène ou un mélange gazeux contenant de l'oxygène et provenant de l'extérieur.